# EUROPEAN PATENT APPLICATION

(11) **EP 2 922 043 A1**
(43) Date of publication of application: **23.09.2015**
(21) Application number: 13854833.4
(22) Date of filing: 11.02.2013
(51) Int. Cl.: G08G 1/042, B60R 13/10

(54) **INDUCTION SYSTEM FOR DETECTING AND IDENTIFYING VEHICLES, INDUCTION REGISTRATION PLATE AND INDUCTION READER**

(30) Priority: 16.11.2012 RU 2012148736
(71) Applicant: Matsur, Igor Yurievich, Tula 300034 (RU)
(72) Inventor: Matsur, Igor Yurievich, Tula 300034 (RU)
(74) Representative: Jeck, Anton
(86) International application number: PCT/RU2013/000096
(87) International publication number: WO 2014/077726

(57) **Abstract**

The present invention relates to traffic control devices designed to register vehicles and monitor traffic using vehicle identification.

The objective of the invention is to simplify the system in order to make it single-band, to use a magnetic frame placed under the roadway instead of antenna fixtures over the road or at the roadside, as well as to provide safe and reliable functioning of the system while detecting and identifying fast-moving vehicles with HF-band ultra-long-range induction systems.

The induction vehicle detection and identification system comprises electronic identification means with electronic memory, mounted on vehicles, and a reader capable of reading and/or writing data obtained from HF-band electronic identification means, wherein electronic vehicle identification means are integrated into the vehicle's license plate and the electronic memory unit is non-volatile; and wherein the reader is equipped with a magnetic frame, which is put into a dielectric casing installed approximately 1 m beneath the roadway, wherein the said frame generates alternating magnetic field making up its detection and identification coverage, which is as wide as the lane, up to 2m long, and reaches at least 1 m above, when signals reaching the frame are excited with power of up to 1W; and wherein the minimum time the reader requires to read discrete responses generated by electronic identification means and to identify a vehicle does not exceed 25 ms and conforms to the vehicle speed of up to 250 km/h; and wherein electronic identification means and the reader are capable of exchanging data with each other at the rate of at least 1 Kbit/sec; and wherein electronic identification means and the reader are capable of encoding and decoding data, as well as restricting data access.

## Description

### a. Field of the Invention

The present invention relates to traffic control devices designed to register vehicles and monitor traffic using vehicle identification.

### b. Background of the related art

A conventional device is an automated vehicle identification system (see US20120056725A1), comprising electronic identification means mounted on vehicles, and electronic means of reading and/or writing the said identification means, both equipped with an induction transmitter and receiver, wherein electronic identification means also include at least one HF-band transmitter able to operate in the range of 10-90 cm, at least one UHF-band transmitter able to operate in the range of 300-1000 cm, and an electronic memory unit.

This system has a number of disadvantages:
First, it is overly complex, since it requires using both HF and UHF bands to communicate between electronic identification means mounted on vehicles, and electronic reading means.
Second, UHF-band antennas can't be placed under the roadway because of high wave attenuation. They can't be placed immediately on the roadway as well, because certain weather conditions, such as rain, mud, snow and ice, dramatically decrease range and information reading reliability of the system by increasing wave attenuation and distorting the orientation diagram of electromagnetic fields of the UHF-band antenna. UHF-band RFID system comprising a transponder, an antenna and a reader is operable only under conditions of radio visibility, while large objects, such as vehicles or houses, proportionate to the wavelength can cause either complete loss of signal, as they shield electromagnetic waves, or interference leading to signal distortion.
   To enable the system to identify vehicles, it is necessary to construct posts or farms in order to mount reader antennas over the road so that transponders could operate. Nevertheless, even such constructions do not solve the problem of interference characteristic for the said band, which leads to radio connection failures and decreases reliability of the system. Interference also makes it hard to locate the vehicle on the corresponding lane. Moreover, any constructions over the road or at the roadside distort the architectural outlook of the road network.
Third, HF-band RFID reader systems equipped with antennas, characterised as long-range induction systems, maintain information reading from standard transponders at the distance of 80-90 cm. Still, the dimensions of the said antenna are limited, since its perimeter must be at least ten times less than the wavelength of the induction system for the system to have focused parameters. Thus, the typical coverage of a frame antenna, which is a part of a conventional reader, forming a magnetic field with intensity of at least 150 mA/m for standard transponders, can't exceed the box with dimensions of 800x600x800 mm, wherein the perimeter of the said antenna should correspond to 1/8 of its wavelength (see e.g. HF Long Range reader ID ISC.LR(M)2500 by FEIG Electronic). The said coverage of a magnetic antenna is insufficient for identification of fast-moving objects, including vehicles equipped with transponders, because the time required to read its identification data exceeds the time a vehicle with transponder needs to pass through the area covered by the frame antenna. Even if positioned across a lane, the said antenna won't still be able to cover it entirely because of magnetic frame perimeter limits.
Fourth, the range of such systems is too short compared to dimensions of vehicles, which can vary within meters, and therefore the said systems can't maintain reliable vehicle detection when placed over the road or at the roadside. Moreover, any constructions over the road or at the roadside distort the architectural outlook of the road network and compromise traffic safety.
Fifth, if the HF-band antenna is placed under the roadway, i.e. in conductive environment-a grounded conductor, it is exposed to stray capacitance of the environment and stray currents, which detune the circuit, decreasing its Q-factor and shifting its resonant frequency, which makes it impossible to tune the system properly, so that its performance falls.

The said disadvantages thus limit the application of the conventional solution.

Another conventional device is a license plate implemented as a dielectric plate (see US 5621571), wherein the uppermost layer is reflective and carries a combination of letters and numbers for visual reading, and the underlying dielectric layer includes an antenna, which is capable of transmitting and receiving 915 MHz-frequency signals and is equipped with a connecting feeder.

This device can also be used for radio-frequency identification of a vehicle.

The problem with this device is that it is impossible to make a license plate autonomous, since it contains an antenna requiring a connection. Extra connections make it harder to mount the plate, decrease its reliability and lead to signal losses, thus making passive mode operation impossible.

Another problem is the need to excite the transmitter, which is already rather powerful, since a separate antenna unit inside the license plate requires HF-band operation-in this case, 915 MHz,-and at such frequencies, there is high signal attenuation, and thus it is difficult, or even impossible, for the license plate to operate in the passive mode of radio-frequency communication.

Moreover, high carrier frequencies have wavelengths proportionate to the dimensions of the license plate, and thus the device is prone to negative effects of multiple reflections and shadowing caused by nearby objects, e.g. other vehicles. Multiple reflections distort the antenna orientation diagram, which makes it difficult, or even impossible, to detect and locate the conventional license plate, thus decreasing its reliability when interacting with vehicle identification systems.

The said disadvantages thus limit the application of the conventional device.

Another conventional device is a vehicle detector comprising a sensor implemented as an induction loop placed under the roadway (see US 3651452), wherein its inductive impedance is changed when a vehicle enters its range, a fixed frequency generator, matching devices, generating a control signal which means there is a vehicle nearby, and devices reacting to the said signal.

The known device is able to register a vehicle moving along the lane near the induction loop. However, the known device has the following disadvantages: first, it can't identify passing vehicles, since it doesn't comprise any means of signal decoding; second, reliability of correct detection is low, since the said device may register two vehicles moving closely to each other as one vehicle, or there may be errors in registering oversized vehicles moving along a nearby lane. Besides, there is a high chance that the device misses a small-sized vehicle, or malfunctions because of a sudden change in weather conditions. Moreover, the induction loop of the known device is in no way protected from mechanical impact of moving vehicles; it is thus prone to breakdowns and has a low durability. These disadvantages thus limit reliability and application of the conventional device.

### SUMMARY OF THE INVENTION

Accordingly, the objective of the invention is to expand applicability of the system by simplifying it in order to make it single-band, by using a magnetic frame placed under the roadway instead of antenna fixtures over the road or at the roadside, as well as by providing safe and reliable functioning of the system while detecting and identifying fast-moving vehicles.

To achieve the objective, an induction vehicle detection and identification system is used comprising electronic identification means with electronic memory, mounted on vehicles, and a reader capable of reading and/or writing data obtained from HF-band electronic identification means, wherein electronic vehicle identification means are integrated into the vehicle's license plate and implemented as a resonator comprising a multiturn frame connected to a microchip powered by electric current induced by external alternating magnetic field, a non-volatile memory unit capable of storing identification data of a vehicle, which contain at least its license plate number; and wherein the reader is equipped with a magnetic frame with the perimeter-to-wavelength ratio of 1/5 to 1/2, which is put into a dielectric casing installed approximately 1 m beneath the roadway, wherein the said frame generates alternating magnetic field making up its detection and identification coverage, which is as wide as the lane, up to 2 m long, and reaches at least 1 m above, when signals reaching the frame are excited with power of up to 1 W; and wherein the minimum time the reader requires to read discrete responses generated by electronic identification means and to identify a vehicle does not exceed 25 ms and conforms to the vehicle speed of up to 250 km/h; and wherein electronic identification means and the reader are capable of encoding and decoding data, as well as restricting data access.

In addition:
- the microchip is implemented as a CPU with integral circuit base in a single case with a non-volatile memory unit, the microchip acting as both signal modulator and demodulator;
- the non-volatile memory unit is capable of storing the license plate number of vehicle, as well as information about the owner, their driver's license, technical inspection certificate and cargo characteristics;
- the license plate is implemented as a rectangular dielectric plate framed by a multiturn frame along the perimeter of the plate, while its outer surface is covered with an identifying combination of letters and numbers for visual reading;
- the reader with a magnetic frame is capable of reading data simultaneously from at least 4 electronic vehicle identification means located within the area of detection and identification;
- the reader maintains data exchange with electronic identification means according to ISO-15693-3 standard or compatible ones;
- the reader and electronic identification means are capable of exchanging data with each other at the rate of at least 1 Kbit/sec;
- a vehicle is detected as soon as the reader receives its identification code;
- a vehicle is detected as soon as it disturbs magnetic field around the magnetic frame upon appearing within its coverage;
- the signals reaching the magnetic frame are excited with power of up to 20 W;
- the reader is connected to a computer and is capable of exchanging data with a remote computer at the rate of at least 19.2 Kb/sec;
- the computer comprises computing and data processing means to process data obtained from identified vehicles and use them to control traffic and monitor traffic violations;
- the reader is connected to the computer via an RS232 interface unit or better;
- the computer and/or reader are equipped with a power supply;
- the computer can be connected to one or more readers mounted at different portions of the road;
- the magnetic frame coverage is 3-3.75 m wide, which conforms to the lane width, depending on the road type;
- readers with magnetic frames are placed at the entrance and the exit of an enclosed area with passages 2.5-3 m wide, including parking lots;
- the reader maintains signal generation to control turnpikes, gates, road barriers, or sliding electromechanical stubs;
- the reader is synchronized with visual recognition means in order to check the license plate image against identification data stored in the memory unit of the microchip;
- electronic identification means and the reader are equipped with means of verifying data obtained by the reader;
- electronic identification means and the reader are equipped with means of restricting data access by encoding and decoding transferred identification data.

Accordingly, the objective of the invention is to expand applicability of the system by making it autonomous by maintaining passive mode functionality, as well as to increase its reliability by decreasing its operating frequency range and maintaining its integration into induction HF-band ultra-long-range vehicle identification systems.

To achieve the objective, an induction vehicle's license plate is used, which is implemented as a rectangular dielectric plate covered with an identifying combination of letters and numbers for visual reading, and incorporates a microchip and a non-volatile memory unit with capacity of at least 64 bit to store vehicle identification data-at least its license plate number,-and the said plate is framed by a multiturn frame along the perimeter of the plate, wherein the frame is connected to the microchip, so as to make up an HF-band electromagnetic oscillation resonator with Q-factor of at least 20, the resonator functioning also as microchip's power supply, when the average intensity of external magnetic field at resonator's resonant frequency is at least 10 mA/m; and wherein the microchip maintains generation of modulating signals to modulate oscillations of the electromagnetic oscillation resonator; and wherein the microchip maintains both modulation and demodulation of resonator's electric oscillations, as well as encoding/decoding of signals, and restricts access to data stored in non-volatile memory.

In addition:
- the microchip is implemented as a CPU-based integral circuit;
- the non-volatile memory unit maintains storage of vehicle identification data used to modulate resonator's electric oscillations, and can be re-programmed;
- the non-volatile memory unit is integrated into the microchip's case;
- the connection between the multiturn frame and the microchip is galvanic or transformer one;
- the multiturn frame is made of a conducting material, such as metallic band or tube with a rectangular or round profile, or a conductor with a complex profile;
- the multiturn frame is framing the plate along its perimeter with a gap from its edge;
- the dielectric plate's backside is covered with a magnetic layer;
- the induction license plate's front side, covered with an identifying combination of letters and numbers for visual reading, is reflective;
- the microchip has an SAW structure;
- the microchip is capable of implementing anti-collision ISO 15693, 1800-3 protocols and compatible ones;
- the microchip-generated modulating signal's spectrum width corresponds to message generation with data exchange rate of at least 1 Kbit/sec;
- the microchip maintains data encoding in order to restrict access to data stored in non-volatile memory;
- the induction license plate has holes for it to be mounted on the vehicle as stipulated in state standards for state-issued license plates;
- the dielectric plate is multi-layered;
- the induction license plate is of the same shape and appearance as a state-issued license plate;
- the induction license plate can be mounted on the metallic surface of the vehicle with at least 10 cm gap.

Accordingly, the objective of the invention is to expand applicability of the system by maintaining identification of moving vehicles and increasing reliability of the system.

To achieve the objective, an induction reader is used, which comprises a magnetic frame placed under the roadway, wherein the reader incorporates a signal generating and processing node, and a matching node connected to the said frame; and wherein the frame is implemented as a rectangular HF-band oscillating circuit made of conducting materials with outer surface profile perimeter of 10-100 mm, while the ratio between its shorter side and its longer side is 1/3 to 1/8, and the ratio between its perimeter and wavelength is 1/5 to 1/2; and wherein the frame is placed so as its longer side is oriented across the lane; and wherein the frame is enclosed in a dielectric case, implemented as a 50-200 mm-high box and placed approximately 1000 mm under the roadway, wherein the dielectric case layer separating the frame from the environment is 50-200 mm wide; and wherein the signal generating and processing node maintains signal modulation/demodulation, as well as encoding/decoding signals, and data access restriction.

In addition:
- the frame's dielectric case has dielectric coefficient of 1-5, and its dielectric loss tangent is less than 10-2-10-3;
- the magnetic frame is made of metallic band, which is at least 0.1 mm wide;
- the magnetic frame is made of a metallic tube with a rectangular or round profile;
- the matching device's case is implemented as a bow with dimensions of 200x120x70 mm and made of a dielectric material;
- the matching node is connected to the signal generating and processing node via a control and power cable;
- the oscillating circuit of the induction reader is capable of self-adjustment;
- the signal generating and processing node maintains data encoding in order to restrict data access;
- the signal generating and processing node maintains verification of received data;
- the induction reader can be remotely adjusted, either manually or automatically, by changing circuit parameters;
- the case of the magnetic frame is resistant to vibration, precipitation, corrosive fluids and mediums, sand-salt mix, petrol, mold, and can sustain temperatures of at least 170°C while being installed under the roadway;
- the case of the magnetic frame is capable of sustaining at least 10-ton pressure of a wheelset;
- the induction reader is connected to a computer.

### BRIEF DESCRIPTION OF THE ATTACHED FIGURES

The accompanying drawings, which are included to provide a further understanding of the invention and are incorporated in and constitute a part of this specification, illustrate embodiments of the invention and, together with the description, serve to explain the principles of the invention.

In the drawings:

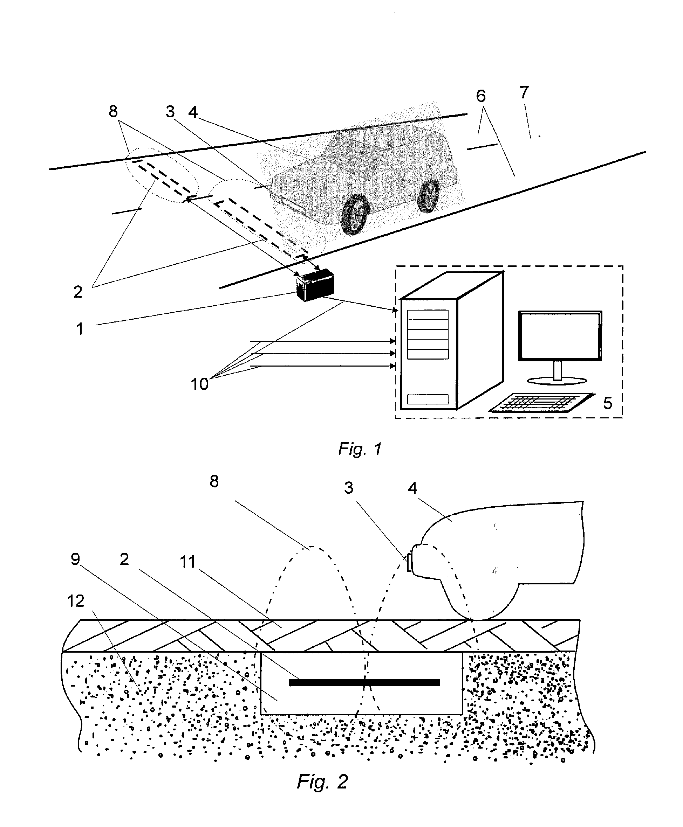

- FIG. 1: is a diagram for placing the reader and the magnetic frame in relation to the road.
- FIG. 2: illustrates the roadway with a magnetic frame installed, in section.

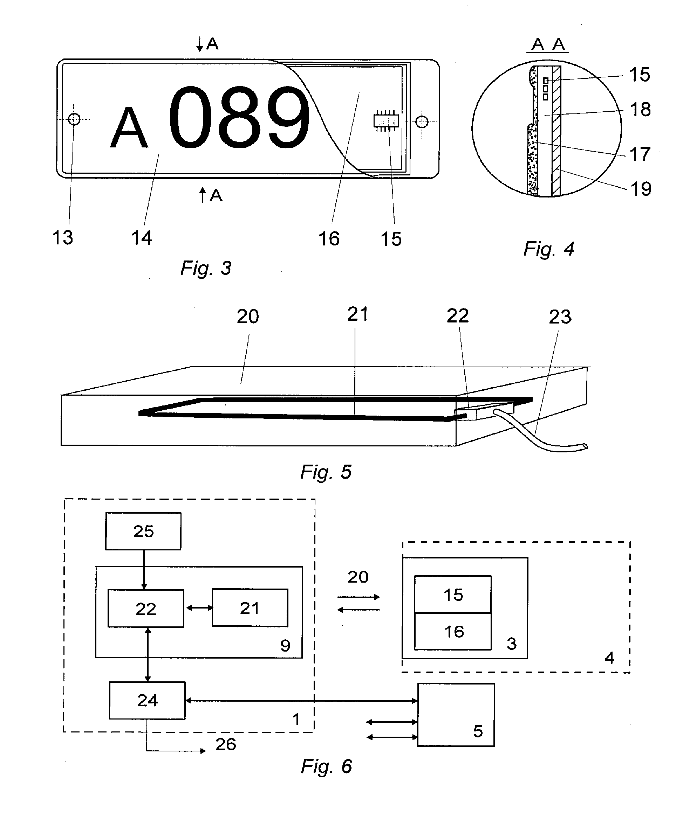

- FIG. 3: illustrates the induction license plate, front view.
- FIG. 4: illustrates the induction license plate in section, side view.
- FIG. 5: illustrates the magnetic frame in a dielectric case.
- FIG. 6: is a schematic diagram of the induction vehicle detection and identification system.

The drawings bear the following marks:
1 - a reader;
2 - a magnetic frame placed under the roadway and under some lane;
3 - an induction license plate;
4 - a vehicle;
5 - a computer;
6 - a lane;
7 - a traffic line;
8 - magnetic frame coverage;
9 - a dielectric case of the magnetic frame;
10 - computer ports for readers;
11 - roadway;
12 - ground-fill;
13 - fixture holes;
14 - the outer reflective layer of the induction license plate covered with identification data for visual recognition;
15 - a multiturn frame;
16 - a microchip;
17 - a combination of letters and numbers on the outer surface of the induction license plate;
18 - a dielectric plate;
19 - the backside of the dielectric plate covered with a magnetic layer;
20 - induction connection between the resonator of the induction license plate and the magnetic frame;
21 - metallic band of the magnetic frame;
22 - a matching node;
23 - a cable for connecting the matching node of the magnetic frame to the signal generating and processing node;
24 - a signal generating and processing node (a reader);
25 - a control panel for the matching node;
26 - a reader's port for turnpike control.

### DETAILED DESCRIPTION OF THE INVENTION

An induction vehicle detection and identification system comprises an electronic vehicle identification means with a magnetic frame, a microchip and a non-volatile memory unit for storing identification data of a vehicle with capacity of at least 64 bit, and a reader to read data from memory of electronic vehicle identification means. An electronic vehicle identification means is integrated into the vehicle's license plate, thus making up an induction license plate mounted at the same place as a regular vehicle license plate.

The front side of an induction license plate is covered with identification data for visual reading.

The reader is equipped with a magnetic frame installed no more than 1 m deep under the roadway, which is capable of reading information from above the roadway, i.e. the lane above. The said frame's ports are fed by a reader's generator with an alternating signal of 1-20 W power, creating an alternating magnetic field around the frame, i.e. its coverage, or its detection and identification area, the edges of which are determined by imaginary surface around the said frame, wherein the intensity of the said field is at least 10 mA/m and the reader is capable of reading information from the memory of the induction license plate of a vehicle moving through the area covered by the magnetic frame at speed of up to 250 km/h.

The range of the magnetic frame, if it isn't covered with roadway, is at least 2.2 m in the direction orthogonal to the plane of the frame. When the said frame is installed under the roadway, its range reaches at least 1 m above the road. Thus, the total range of the frame installed up to 1 m deep under the roadway, which interacts with an induction license plate, is at least 2 m counting from the plane of the frame, which characterizes the present vehicle detection and identification system as an ultra-long-range induction system.

The reader reads data in discreet packages from the induction license plate of a vehicle according to the ISO-15693-3 standard or compatible ones. The minimum time needed to read the packages generated by electronic identification means and to identify the vehicle is up to 25 msec and conforms to the vehicle speed of up to 250 km/h.

The reader is capable of reading identification data simultaneously from at least 4 electronic identification devices, that are located within the frame coverage.

The reader is connected to a remote computer, functioning as a server, via an RS232 interface unit or better, wherein the data exchange rate is at least 19.2 Kbit/sec.

The computer comprises computing and data processing means to process data obtained from identified vehicles and use it to control traffic and monitor traffic violations.

The remote computer and/or reader are equipped with a power supply.

Readers with magnetic frames are stereotyped devices installed at different portions of the road, wherein the computer is capable of connecting either to one reader, to several ones, or to all of them at once.

The induction vehicle detection and identification system functions as follows:
The vehicle, equipped with an induction license plate comprising electronic vehicle identification means and a passive resonator consisting of a multiturn frame and a microchip with non-volatile memory, drives along the road, passing also some specific portions of the road, where magnetic frames connected to a designated reader are installed under the roadway. The readers maintain generation of alternating magnetic field with HF-band frequency (3-30 MHz), which is external with regards to the passive resonator mounted on the vehicle.

Installing magnetic frames under the roadway, one should consider the earth effect, which increases according to the size of the antenna; its size corresponding to the width of the lane, which is up to 3.75 m on some roads.

The magnetic frame should be placed at some depth in order to provide enough safety for fast-moving vehicles. The said frame should be placed under the pavement layer, i.e. at least 20 cm deep under the roadway, in order to avoid destruction of the pavement at the installation spot.

The induction vehicle detection and identification system comprising multiple magnetic frames placed at various portions of the road maintains vehicle detection with precise geographical location. A vehicle can be registered at a specific moment in time with high precision of time and place positioning, which is determined correspondingly by the magnetic frame rage and identification time span (2 m and 25 msec at max speed of 250 km/h). Also, vehicle registration data collected on specific portions of the road and stored for further analysis in a finite time span allow the present system to determine the direction, in which the vehicle was moving. Additionally, the calculation of time a vehicle required to pass between two neighbouring points on the road, where magnetic frames are installed, allows to calculate the vehicle speed, if the distance between the said points is known.

The magnetic frame has a much longer range than those used in conventional systems due to its designed perimeter-to-wavelength ratio of 1/5 to 1/2, which allows the magnetic field to cover the entire lane. At the same time, the multiturn frame framing the perimeter of the license plate, which is bigger than regular transponders, allows to get a resonator of maximum size and maximum sensitivity of vehicle identification means, which is more than ten times greater than the sensitivity of conventional means. This, in turn, provides for ultra-long-range functioning of the present system.

When an induction license plate is brought within the coverage of the magnetic frame, where magnetic field intensity is more than 10mA/m, which is enough to power the resonator's microchip, the microchip generates a modulating signal that interacts the said resonator's oscillations, which, in turn, disturb the magnetic field of the magnetic frame. The modulating signal is generated by the microchip according to the data stored in non-volatile memory. Thus, the resulting magnetic field consists of oscillations, i.e. discrete coded packages containing vehicle identification data.

The disturbed magnetic field with the response signal is transformed by the magnetic frame into electric oscillations, which are input into the reader for demodulation. After the input signal is demodulated and decoded, the passing vehicle is detected, and its identification data are obtained by the system. These data are then sent via wired or wireless communication lines to a computer for further processing.

Vehicles can also be detected based on the disturbances they cause by passing through the alternating magnetic field.

In case multiple vehicles equipped with induction license plates enter the area covered by one and the same reader, their resonators generate corresponding modulated signals with unique rules for resonant (carrier) frequency modulation. The reader is capable of determining that there are multiple signals and maintains generation of the controlling signal with the same resonant frequency, which affects the modulating signal generated by the microchip's CPU, via the integral circuit demodulator, thus separating signals generated by different resonators according to anti-collision ISO 15693, 1800-3 protocols or compatible ones. The said signals are separated, for instance, in time, so as to provide sufficient signal-to-noise ratio and to maintain reliable reading of signals from all resonators located within the reader's coverage.

The present system may also be used to manage access to enclosed areas, such as parking lots. In that case, readers with magnetic frames are placed at entrances and exits of these areas, including parking lot entrances with 2.5-3 m wide passages. The output signal from the reader of the induction vehicle detection and identification system is used to control turnpikes and other kinds of barriers.

When the induction vehicle detection and identification system is used as a part of traffic control systems, it can be augmented, if necessary, with means of visual recognition of license plates of passing vehicles; the induction reader is synchronized with photo/video cameras. The data obtained from the induction reading and visual recognition systems are then checked against the image of the induction license plate and identification data stored in memory of the said license plate's microchip.

The induction vehicle detection and identification system is monoband and operates in low-frequency HF band, which allows to install magnetic frames placed under the roadway. The said system doesn't require to place antenna fixtures over the road or at the roadside. At the same time, the range of the frame is long enough for reliable detection and identification of fast-moving vehicles. In fact, the present system can be classified as an ultra-long-range HF-band one.

The induction vehicle detection and identification system can be implemented with stock components and radio elements, and using either wired or wireless communication lines. The reader can be produced on the basis of existing stock units, such as HF Long Range reader ID ISC.LR(M)2500 by FEIG Electronic.

Therefore, the induction vehicle detection and identification system has a much wider application, since it is simpler and monoband. In addition, it doesn't require placing antenna fixtures over the road or at the roadside, since it comprises a magnetic frame installed under the roadway and also provides for safe and reliable operation in case with fast-moving vehicles.

A vehicle's induction license plate is implemented as a rectangular plate, which is a support framework, made of a dielectric material, the dimensions of a regular license plate and attributes of a state-issued license plate, with necessary fixtures. Its front side is reflective and covered with a combination of letters and numbers for visual reading. Inside the plate, there is a multiturn frame along the plate's perimeter with some gap from the edges of the plate, which has a transformer or galvanic connection to the incorporated integral circuit (microchip). Together, the multiturn frame and the integral circuit make up an HF-band (resonant frequency of 3-30 MHz) alternating magnetic oscillation resonator. The resonator stores energy to power the integral circuit, which is triggered when there is sufficient energy and modulates frequency of resonator's magnetic oscillations, wherein intensity of external magnetic field, which gives electric current enough induction to power the microchip, is at least 10mA/m.

The microchip comprising a CPU is equipped with a non-volatile memory unit with capacity of at least 64 bit to store identification data of a vehicle and functions as a modulator of resonator's harmonic oscillations with modulating signal bandwidth conforming to the data exchange rate of at least 1 Kbit/sec. The said microchip also functions as a demodulator of the control signal of external magnetic field and is capable of implementing anti-collision ISO 15693, 1800-3 protocols or compatible ones, in case there are multiple induction license plate close together.

A vehicle's induction license plate is implemented as a uniform dielectric plate, the dimensions of a regular license plate and attributes of a state-issued license plate, with necessary fixtures.

The microchip can be re-programmed.

The microchip has an SAW structure.

The vehicle's induction license plate functions as follows:

The plate is mounted on the vehicle's bumper made of a dielectric material, and in case there is a magnetic layer on the plate's backside, it can be mounted directly on metallic surfaces.

The plate is mounted in a conventional way; there's no need of extra supply voltage connections.

Alternating magnetic field generators oscillating in HF band are placed at the specified portions of the road. When the vehicle's induction license plate is brought into the alternating magnetic field, the plate's resonator transforms energy of the magnetic field into electric current.

The resonator has larger area if compared to conventional transponders, which minimizes the value of intensity of the alternating magnetic field required to trigger the microchip, due to positioning of the multiturn frame along the perimeter of the plate.

In case intensity of the magnetic field is at least 10mA/m, the energy stored by the resonator is enough to trigger and power the microchip, which modifies (modulates) the resonator parameters, so that the resonator circuit generates a modulated signal, wherein the modulation rule is determined by identification data of the vehicle stored in the non-volatile memory unit of the integral microchip. Therefore, the modulating signal fully corresponds to identification data of the vehicle.

The microchip modulates (manipulates) amplitude, frequency or phase of resonator oscillations. The modulating signal spectrum conforms to data exchange rate of at least 1 Kbit/sec. Thus, the resonator generates a signal containing a codeword with data corresponding to the identification data of the vehicle.

The current, which flows through the resonator circuit and changes over time, generates corresponding alternating magnetic field, which, in turn, influences external alternating magnetic field exciting the resonator circuit. The disturbance of the magnetic field is needed for its further demodulation by means placed at the same place as the external alternating magnetic field generator.

Induction license plates should be mounted on multiple vehicles, wherein non-volatile memory of each said plate stores identification data of the vehicle. In case there are multiple vehicles, each equipped with an induction license plate, within the area covered by one and the same magnetic field generator, their resonators generate corresponding modulated signals with unique rules used to modulate the resonant (carrier) frequency. In this case, the external magnetic field generator generates controlling signals at the same resonant frequency, which are then demodulated by the microchip and affect generation of a modulating signal by the microchip. As a result, the signals generated by different resonators are separated according to anti-collision ISO 15693, 1800-3 protocols or compatible ones. The said signals are separated, for instance, in time, so as to provide sufficient signal-to-noise ratio and to maintain reliable demodulation of signals from all resonators located within the area covered by the external magnetic field generator.

The vehicle's induction license plate can be produced by conventional means from standard materials, components and integral microchips or chips with SAW structure.

Therefore, the vehicle's induction license plate has a much wider application, since it is autonomous and can function fully in passive mode. In addition, it locates vehicles more precisely and reliably due to reducing of the operating band and capability to operate as a part of HF-band ultra-long-range induction vehicle detection and identification systems.

An induction reader comprises a magnetic frame installed under the roadway and connected to a matching node and a signal generating and processing node. The said frame is implemented as a rectangular HF-band oscillating circuit made of conducting materials. Its outer surface profile perimeter is 10-100 mm, the ratio between its shorter side and its longer side is 1/3 to 1/8, and the ratio between its perimeter and wavelength is 1/5 to 1/2. The frame is placed so that its longer side is oriented across the lane; the frame is enclosed in a dielectric case, implemented as a 50-200mm-high box and placed approximately 1000mm under the roadway, wherein the dielectric case layer separating the frame from the environment is 50-200mm wide. The signal generating and processing node maintains signal modulation/demodulation, as well as encoding/decoding of signals, and data access restriction by signal encoding.

The dielectric case of the frame has 1-5 dielectric coefficient, and its dielectric loss tangent doesn't exceed 10-2-10-3.

The magnetic frame is made either of metallic band, which is at least 0.1 mm wide, or of metallic tube with a rectangular or round profile.

The matching node has a case made of a dielectric material, which is a box with dimensions of 200x120x70 mm, and it is connected to the signal generating and processing node via a control and power cable.

The oscillating circuit of the induction reader is self-adjusting, or it can be remotely adjusted, either manually or automatically.

The signal generating and processing node also maintains verification of the obtained data.

The case of the magnetic frame case is resistant to vibration, precipitation, corrosive fluids and mediums, sand-salt mix, petrol, mold, and can sustain temperatures of 170°C or more while being installed under the roadway, as well as at least 10-ton pressure of a wheelset.

The signal generating and processing node is connected to a computer functioning as a server for collection and analysis of data necessary for traffic control.

The induction reader functions as follows:

The signal generating and processing node generates an HF-band signal (3-30 MHz), which is used as an input for the matching device connected to the rectangular frame integrated into a dielectric case placed 200-1000mm deep under the roadway.

The matching device maintains remote adjustment (via a control panel) of the magnetic frame circuit by adjusting its resonant frequency.

Alternating current flowing through the said frame causes the frame to generate a corresponding HF-band alternating magnetic field determining the magnetic frame coverage, the edges of which are determined by imaginary surface around the said frame, wherein the intensity of the magnetic field is at least 10mA/m, sufficient to trigger an induction license plate located at least 1 m above the roadway. The area covered is affected by the dimensions of the frame, how deep it is installed, resonant frequency of its circuit, and the power of the signal generated by the signal generating and processing node.

The perimeter of the magnetic frame is rather large compared to the wavelength, and due to that fact it is capable of covering the entire lane. The area covered by a 200x500 mm magnetic frame installed under a 3200 mm-wide lane is an area above the road with dimensions of at least 3200x600x1000 mm.

When a vehicle equipped with an induction license plate enters the area covered by the magnetic frame, the magnetic field excites the said plate and generates a response, which disturbs the field generated by the magnetic frame; this disturbance is transformed by the frame into an electric signal, which is read by the reader (decoder) and then decoded to obtain identification data of the vehicle and transfer them to a remote computer.

Due to its design, the induction reader can be used in HF-band ultra-long-range induction vehicle detection and identification systems.

The frame is to be made of metallic band or tube, wherein the conductor is 48-102 mm wide and 0.1-1 mm thick. The ratio between the sides of the rectangular frame should be between 1/3 and 1/8, and the perimeter-to-wavelength ratio should be between 1/5 and 1/2. The typical dimensions of the frame made of metallic band are 500x2000 mm, where band is 50mm wide and 0.5mm thick; the dielectric case is a box with dimensions of 2500x500x200 mm (LxWxH).

The case of the magnetic frame forms a dielectric layer, which is at least 50mm thick, between the said frame and the roadway (conductive environment); the layer has 1-5 dielectric coefficient, and its dielectric loss tangent is no more than 10-2-10-3. The case is 50-200 mm thick, thus decreasing the effect of the environment on the Q-factor and resonant frequency of the oscillating circuit formed by the frame. The weight of the case is no more than 50 kg.

The case protects the frame and the matching device from external forces, primarily, mechanical ones; when placed under the roadway, the frame is exposed to major pressure - up to 10 tons - created by wheelsets of passing vehicles.

In addition, the case protects the frame and the matching device from moisture, corrosive fluids and mediums (e.g. petrol, etc.), and temperatures from -60°C to 200°C.

The matching device provides for remote adjustment of the frame circuit and is placed inside the dielectric case together with the frame under the roadway, the roadway having variable electrical and physical properties (magnetic capacity, dielectric coefficient, conductivity). To overcome distortions caused by the roadway, the matching device is capable of remote automatic self-adjustment by running self-diagnostics, measuring the stationary wave coefficient at the resonant frequency, and adjusting the circuit parameters, which can also be done manually by an operator from a control panel or a remote computer.

The induction reader has a self-adjusting magnetic frame circuit, the self-adjustment consisting in automatic measurement of the stationary wave coefficient and adjustment of the oscillating circuit parameters to minimize fluctuations.

The reader can be produced from stock materials, elements and radio components using sheet and shaped metal processing. The signal generating and processing node can be implemented on the basis of existing stock units, such as HF Long Range reader ID ISC.LR(M)2500 by FEIG Electronic.

Therefore, the induction reader has a much wider application, since it provides for identification of passing vehicles and improves reliability of ultra-long-range induction systems.

## Claims

1. An induction vehicle detection and identification system comprising electronic identification means with electronic memory, mounted on vehicles, and a reader capable of reading and/or writing data obtained from HF-band electronic identification means, wherein electronic vehicle identification means are integrated into the vehicle's license plate and implemented as a resonator comprising a multiturn frame connected to a microchip powered by electric current induced by external alternating magnetic field, a non-volatile memory unit capable of storing identification data of a vehicle, which contain at least its license plate number; and wherein the reader is equipped with a magnetic frame with the perimeter-to-wavelength ratio of 1/5 to 1/2, which is put into a dielectric casing installed approximately 1 m beneath the roadway, wherein the said frame generates alternating magnetic field making up its detection and identification coverage, which is as wide as the lane, up to 2m long, and reaches at least 1 m above, when signals reaching the frame are excited with power of up to 1W; and wherein the minimum time the reader requires to read discrete responses generated by electronic identification means and to identify a vehicle does not exceed 25 ms and is proportionate to the vehicle speed of up to 250 km/h; and wherein electronic identification means and the reader are capable of encoding and decoding data, as well as restricting data access.

2. The induction vehicle detection and identification system of claim 1, wherein the microchip is implemented as a CPU with integral circuit base in a single case with a non-volatile memory unit, the microchip acting as both signal modulator and demodulator.

3. The induction vehicle detection and identification system of claim 1, wherein the non-volatile memory unit is capable of storing the license plate number of vehicle, as well as information about the owner, their driver's license, technical inspection certificate and cargo characteristics.

4. The induction vehicle detection and identification system of claim 1, wherein the license plate is implemented as a rectangular dielectric plate framed by a multiturn frame along the perimeter of the plate, while its outer surface is covered with an identifying combination of letters and numbers for visual reading.

5. The induction vehicle detection and identification system of claim 1, wherein the reader with a magnetic frame is capable of reading data simultaneously from at least 4 electronic vehicle identification means located within the magnetic frame coverage.

6. The induction vehicle detection and identification system of claim 1, wherein the reader maintains data exchange with electronic identification means according to ISO-15693-3 standard or compatible ones.

7. The induction vehicle detection and identification system of claim 1, wherein the reader and electronic identification means are capable of exchanging data with each other at the rate of at least 1 Kbit/sec.

8. The induction vehicle detection and identification system of claim 1, wherein a vehicle is detected as soon as the reader receives its identification code.

9. The induction vehicle detection and identification system of claim 1, wherein a vehicle is detected as soon as it disturbs magnetic field around the magnetic frame upon appearing within its coverage.

10. The induction vehicle detection and identification system of claim 1, wherein the signals reaching the magnetic frame are excited with power of up to 20W.

11. The induction vehicle detection and identification system of claim 1, wherein the reader is connected to a computer and is capable of exchanging data with it at the rate of at least 19.2 Kb/sec.

12. The induction vehicle detection and identification system of claim 11, wherein the computer comprises computing and data processing means to process data obtained from identified vehicles and use them to control traffic and monitor traffic violations.

13. The induction vehicle detection and identification system of claim 11, wherein the reader is connected to the computer via an RS232 interface unit or better.

14. The induction vehicle detection and identification system of claim 11, wherein the computer and/or reader are equipped with a power supply.

15. The induction vehicle detection and identification system of claim 11, wherein the computer can be connected to one or more readers mounted at different portions of the road.

16. The induction vehicle detection and identification system of claim 1, wherein the magnetic frame coverage is 3-3.75 m wide, which conforms to the lane width, depending on the road type.

17. The induction vehicle detection and identification system of claim 1, wherein readers with magnetic frames are placed at the entrance and the exit of an enclosed area with passages 2.5-3m wide, including parking lots.

18. The induction vehicle detection and identification system of claim 1, wherein the reader maintains signal generation to control turnpikes, gates, road barriers, or sliding electromechanical stubs.

19. The induction vehicle detection and identification system of claim 1, wherein the reader is synchronized with visual recognition means in order to check the license plate image against identification data stored in the memory unit of the microchip.

20. The induction vehicle detection and identification system of claim 1, wherein electronic identification means and the reader are equipped with means of verifying data obtained by the reader.

21. The induction vehicle detection and identification system of claim 1, wherein electronic identification means and the reader are equipped with means of restricting data access by encoding and decoding transferred data.

22. An induction vehicle's license plate implemented as a rectangular dielectric plate covered with an identifying combination of letters and numbers for visual reading, wherein the said plate incorporates a microchip and a non-volatile memory unit with capacity of at least 64 bit to store vehicle identification data-at least its license plate number,-and the said plate is framed by a multiturn frame along the perimeter of the plate, wherein the frame is connected to the microchip, so as to make up an HF-band electromagnetic oscillation resonator with Q-factor of at least 20, the resonator functioning also as microchip's power supply, when the average intensity of external magnetic field at resonator's resonant frequency is at least 10mA/m; and wherein the microchip maintains generation of modulating signals to modulate oscillations of the resonator's alternating current; and wherein the microchip maintains both modulation and demodulation of resonator's electric oscillations, as well as encoding/decoding of signals, and restricts access to data stored in non-volatile memory.

23. The induction vehicle's license plate of claim 22, wherein the microchip is implemented as a CPU-based integral circuit.

24. The induction vehicle's license plate of claim 22, wherein the non-volatile memory unit maintains storage of vehicle identification data used to modulate resonator's alternating current, and can be re-programmed.

25. The induction vehicle's license plate of claim 22, wherein the non-volatile memory unit is integrated into the microchip's case.

26. The induction vehicle's license plate of claim 22, wherein the connection between the multiturn frame and the microchip is galvanic or transformer one.

27. The induction vehicle's license plate of claim 22, wherein the multiturn frame is made of a conducting material, such as metallic band or tube with a rectangular or round profile, or a conductor with a complex profile.

28. The induction vehicle's license plate of claim 22, wherein the multiturn frame is framing the plate along its perimeter with a gap from its edge.

29. The induction vehicle's license plate of claim 22, wherein the dielectric plate's backside is covered with a magnetic layer.

30. The induction vehicle's license plate of claim 22, wherein the induction license plate's front side, covered with an identifying combination of letters and numbers for visual reading, is reflective.

31. The induction vehicle's license plate of claim 22, wherein the microchip has an SAW structure.

32. The induction vehicle's license plate of claim 22, wherein the microchip is capable of implementing anti-collision ISO 15693, 1800-3 protocols and compatible ones.

33. The induction vehicle's license plate of claim 22, wherein the microchip-generated modulating signal's spectrum width corresponds to message generation with data exchange rate of at least 1 Kbit/sec.

34. The induction vehicle's license plate of claim 22, wherein the microchip maintains data encoding in order to restrict access to data stored in non-volatile memory.

35. The induction vehicle's license plate of claim 22, wherein the induction license plate has holes for it to be mounted on the vehicle as stipulated in state standards for state-issued license plates.

36. The induction vehicle's license plate of claim 22, wherein the induction license plate is of the same shape and appearance as a state-issued license plate.

37. The induction vehicle's license plate of claim 22, wherein the induction license plate can be mounted on the metallic surface of the vehicle with at least 10cm gap.

38. The induction vehicle's license plate of claim 22, wherein the dielectric plate is multi-layered.

39. An induction reader is used, comprising a magnetic frame placed under the roadway, wherein the reader incorporates a signal generating and processing node, and a matching node connected to the said frame; and wherein the frame is implemented as a rectangular HF-band oscillating circuit made of conducting materials with outer surface profile perimeter of 10-100mm, while the ratio between its shorter side and its longer side is 1/3 to 1/8, and the ratio between its perimeter and wavelength is 1/5 to 1/2; and wherein the frame is placed so that its longer side is oriented across the lane; and wherein the frame is enclosed in a dielectric case, implemented as a 50-200mm-high box and placed approximately 1000mm under the roadway, wherein the dielectric case layer separating the frame from the environment is 50-200mm wide; and wherein the signal generating and processing node maintains signal modulation/demodulation, as well as encoding/decoding signals, and data access restriction.

40. The induction reader of claim 39, wherein the frame's dielectric case has dielectric coefficient of 1-5, and its dielectric loss tangent is less than 10-2-10-3.

41. The induction reader of claim 39, wherein the magnetic frame is made of metallic band, which is at least 0.1 mm wide.

42. The induction reader of claim 39, wherein the magnetic frame is made of a metallic tube with a rectangular, round, or complex profile.

43. The induction reader of claim 39, wherein the matching device's case is implemented as a bow with dimensions of 200x120x70mm and made of a dielectric material.

44. The induction reader of claim 39, wherein the matching node is connected to the signal generating and processing node via a control and power cable.

45. The induction reader of claim 39, wherein the oscillating circuit of the induction reader is capable of self-adjustment.

46. The induction reader of claim 39, wherein the signal generating and processing node maintains data encoding in order to restrict data access.

47. The induction reader of claim 39, wherein the signal generating and processing node maintains verification of received data.

48. The induction reader of claim 39, wherein the reader can be remotely adjusted, either manually or automatically, by changing circuit parameters.

49. The induction reader of claim 39, wherein the case of the magnetic frame is resistant to vibration, precipitation, corrosive fluids and mediums, sand-salt mix, petrol, mold, and can sustain temperatures of at least 170°C while being installed under the roadway.

50. The induction reader of claim 39, wherein the case of the magnetic frame is capable of sustaining at least 10-ton pressure of a wheelset.

51. The induction reader of claim 39, wherein the reader is connected to a computer.
